# EUROPÄISCHE PATENTANMELDUNG

(11) **EP 0 779 569 A2**
(43) Veröffentlichungstag der Anmeldung: **18.06.1997**
(21) Anmeldenummer: 96119384.4
(22) Anmeldetag: 03.12.1996
(51) Int. Cl.: G06F 1/00

(54) **Datenverarbeitungsanlage mit Vorrichtungen zur Steuerung der Zugriffsberechtigung, welche den Komponenten der Datenverarbeitungsanlage direkt zugeordnet sind**

(30) Priorität: 14.12.1995 DE 29519865 U
(71) Anmelder: SIEMENS AKTIENGESELLSCHAFT, 80333 München (DE)
(72) Erfinder: Kuntz, Helmut, 90766 Fürth (DE)

(57) **Zusammenfassung**

Die bei Datenverarbeitungsanlagen eingesetzten Systeme zur Identifikation von Benutzern sind vorwiegend darauf ausgerichtet, die auf Datenträgern gespeicherten Daten vor unbefugter Einsicht zu schützen. Insbesondere mit der Einführung tragbarer Datenverarbeitungsanlagen, ist zusätzlich zum Datenschutz insbesondere dem Zugriffsschutz der Datenverarbeitungsanlagen und deren einzelnen Komponenten gegenüber nichtberechtigten Benutzern, insbesondere dem Diebstahlschutz, eine zusätzliche Bedeutung beizumessen. Erfindungsgemäß ist in den Komponenten, wie beispielsweise einem Festplattenlaufwerk oder Speichereinheiten, jeweils lokal eine Vorrichtung zur Steuerung der Zugriffsberechtigung für die jeweilige Komponente untergebracht. Diese können vorteilhaft auch mit den Komponenten zugeordneten Stromspareinrichtungen verschaltet sein. Durch ein Implementieren der erfindungsgemäßen Vorrichtungen zur Steuerung der Zugriffsberechtigung insbesondere in funktions- und wertrelevanten Komponenten der Datenverarbeitungsanlage, sind nicht nur die einzelnen Komponenten als solche, sondern auch die gesamte Datenverarbeitungsanlage vor dem unbefugten Zugriff durch nicht berechtigte Benutzer und Besitzer geschützt.

## Beschreibung

Die bei Datenverarbeitungsanlagen bisher eingesetzten Systeme zur Identifikation von Benutzern dienen vorwiegend dazu, die auf Datenträgern gespeicherten Daten vor unbefugter Einsicht zu schützen. Insbesondere mit der Einführung tragbarer Datenverarbeitungsanlagen, wie beispielsweise sogenannten Notebooks, Palmtops und Organizern, kommt zusätzlich zum Datenschutz auch dem Zugriffsschutz der Datenverarbeitungsanlagen und deren einzelnen Komponenten gegenüber nichtberechtigten Besitzern, insbesondere dem Diebstahlschutz, eine zunehmende Bedeutung zu.

Besonders dem Teilkomponentenschutz kommt eine wachsende Bedeutung zu. Da der Wert der einzelnen Teilkomponenten gestiegen ist, und da diese häufig in völlig unterschiedlichen Anwendungen, insbesondere im Bereich der Datenverarbeitungsanlagen, verwendbar sind, wächst auch die Notwendigkeit die einzelnen Teilkomponenten gegenüber nichtberechtigten Besitzern, insbesondere gegenüber Diebstahl, zu schützen.

Bisherige, insbesondere softwarebasierte Systeme zur Benutzeridentifikation sind bevorzugt auf Datenträgern der Datenverarbeitungsanlage gespeichert, z.B. auf einer Festplatte. Da heute der Wert von derartigen Datenträgern im Vergleich zum Gesamtwert einer Datenverarbeitungsanlage einen immer kleiner werdenden Anteil einnimmt, bleibt eine portable Datenverarbeitungsanlage auch dann für eine Weiterverwendung interessant, wenn derartige Komponenten z.B. zum Zwecke einer Deaktivierung darauf befindlicher Benutzeridentifikationseinrichtungen ausgetauscht bzw. erneuert wurden.

Bekannt sind Datenverarbeitungsanlagen mit Systemen zur Identifikation von Benutzern, wobei insbesondere durch sogenannte Paßwörter, die Zugriffsberechtigung eines Benutzers der Datenverarbeitungsanlage überprüft wird. Die Überprüfung der Zugriffsberechtigung wird dabei zentral und den Komponenten übergeordnet durch das Betriebssystem vorgenommen. Insbesondere durch Entnahme von Komponenten aus der Datenverarbeitungsanlage kann dann unter Umgehung einer Überprüfung der Zugriffsberechtigung insbesondere auf darin gespeicherte Daten unberechtigt zugegriffen werden.

Aufgabe der Erfindung ist es, eine gegen unbefugten Zugriff geschützte Datenverarbeitungsanlage anzugeben.

Die Aufgabe wird gelöst mit der im Anspruch 1 enthaltenen Vorrichtung. Eine bevorzugte weitere Ausführungsform der Erfindung ist in dem Unteranspruch angegeben.

Vorteil der Erfindung ist es, daß in den Komponenten jeweils bevorzugt direkt lokal eine Vorrichtung zur Steuerung der Zugriffsberechtigung für die entsprechende Komponente untergebracht ist. Durch eine Implementierung derartiger Vorrichtungen insbesondere in funktions-, daten- und wertrelevante Komponenten der Datenverarbeitungsanlage, sind nicht nur die einzelnen Komponenten als solche, sondern auch die gesamte Datenverarbeitungsanlage vor dem unbefugten Zugriff durch nicht berechtigte Benutzer geschützt.

Vorteilhaft sind somit auch ausgebaute oder ausgewechselte Komponenten, wie insbesondere Festplattenlaufwerke, beispielsweise nach einem Recycling oder nach einer Erweiterung der Datenverarbeitungsanlage, vor bewußtem und/oder unbewußtem Zugriff durch nicht berechtigte Benutzer geschützt.

Ein weiterer Vorteil ist die mögliche Verschaltung der erfindungsgemäßen Vorrichtungen mit Stromspareinrichtungen, auch sogenannten Sleep-Funktionen, welche den Komponenten der Datenverarbeitungsanlage zugeordnet sind. Die Vorrichtungen zur Steuerung der Zugriffsberechtigung deaktivieren jeweils, quasi durch Vermittlung über die dazugehörigen Stromspareinrichtungen, die entsprechenden Komponenten der Datenverarbeitungsanlage zumindest solange, bis eine Identifizierung des Benutzers erfolgt ist.

Ebenso vorteilhaft kann die erfindungsgemäße Vorrichtung zur Steuerung der Zugriffsberechtigung mit dem bisher bekannten, vom Betriebssystem der Datenverarbeitungsanlage zentral ausgeführten Datenschutz kombiniert werden, wodurch ein Zugriffsschutz sowohl auf Daten, als auch auf die einzelnen Komponenten der Datenverarbeitungsanlage erreicht wird.

Die Erfindung wird desweiteren anhand der nachfolgend kurz angeführten Figur weiter erläutert.

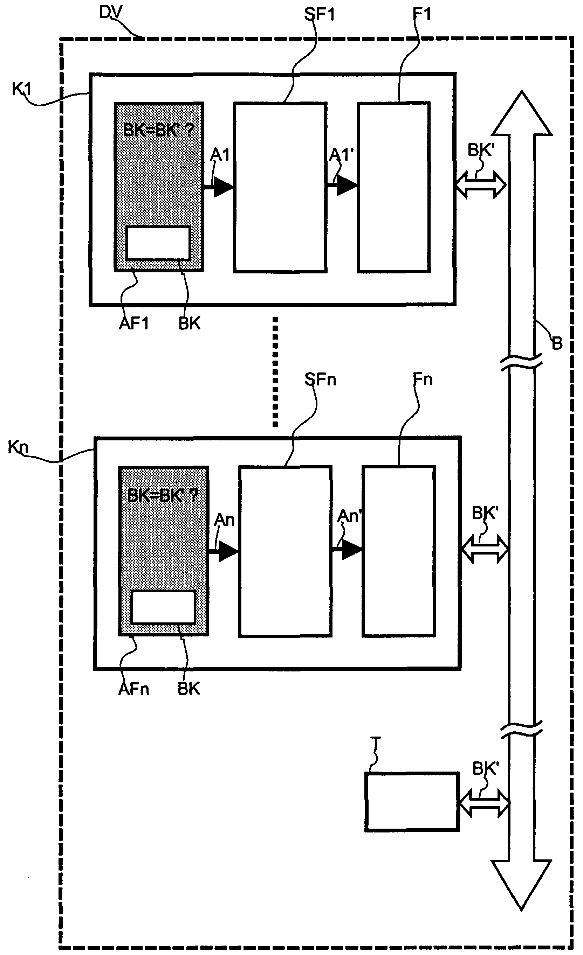

Die Figur zeigt beispielhaft eine schematische Darstellung einer Datenverarbeitungsanlage DV und deren Komponenten K1...Kn. Die Datenverarbeitungsanlage DV ist beispielsweise ein portabler Computer. Um die Datenverarbeitungsanlage DV insgesamt und auch deren einzelne Komponenten K1...Kn als solche vor einem unbefugten Zugriff durch nicht berechtigte Benutzer zu schützen, wie beispielsweise die Entwendung der Datenverarbeitungsanlage DV oder einzelner Komponenten K1...Kn, weisen gemäß der Erfindung insbesondere wert- und funktionswichtige Komponenten K1...Kn jeweils eine separate Vorrichtung zur Steuerung der Zugriffsberechtigung AF1...AFn auf. Zu schützende Komponenten K1...Kn sind dabei insbesondere integrierte Schaltkreise als solches, wie beispielsweise Prozessoren, Speicherchips und wert- und funktionswichtige Halbleiterbauelemente aller Art. Weitere wichtige Komponenten K1...Kn sind insbesondere Komponenten zur Datenein- und Datenausgabe und zur Datenspeicherung, wie beispielsweise Tastatur, Display, Monitor, CD-ROM-Laufwerk, Festplattenlaufwerk und Diskettenlaufwerk.

Die eigentliche Funktionsausfuhrung einer Komponente K1...Kn wird insbesondere durch deren komponentenspezifischen Hauptteil F1...Fn bzw. Hauptteile bereitgestellt. Beispielsweise bei einem Festplattenlaufwerk sind dies im wesentlichen die Laufwerksmechanik und die elektronischen Ansteuerungs- und Datenübertragungsschaltungen. Durch die gemäß der Erfindung in jeder einzelnen Komponente K1...Kn enthaltenen Vorrichtung zur Steuerung der Zugriffsberechtigung AF1...AFn sind deren Hauptteile zunächst blockiert. Auch nach einer Entnahme einer einzelnen Komponente K1...Kn aus der Datenverarbeitungsanlage DV ist ein separater Betrieb derselben nicht möglich, da diese weiterhin blockiert ist. Die Komponenten K1...Kn, und damit auch die gesamte Datenverarbeitungsanlage DV, sind im blockierten Zustand weder einzeln, noch in Kombination mit der Datenverarbeitungsanlage DV gebrauchbar.

Erst nach einer Identifizierung eines zugriffsberechtigten Benutzers in jeder einzelnen Komponente K1...Kn der Datenverarbeitungsanlage DV, werden diese jeweils von der entsprechenden Vorrichtung zur Steuerung der Zugriffsberechtigung AF1...AFn dadurch aktiviert, indem jeweils der Zugriff auf den komponentenspezifischen Hauptteil F1...Fn der entsprechenden Komponente K1...Kn freigegeben wird. Die Datenverarbeitungsanlage DV ist erst nach der quasi Selbstaktivierung aller Komponenten K1...Kn funktionsfähig.

Bei der Identifizierung eines zugriffsberechtigten Benutzers gibt dieser, beispielsweise über eine in der Figur dargestellte Tastatur T, insbesondere eine Kennung BK' ein, welche in jeder Komponente K1...Kn durch die dortige Vorrichtung zur Steuerung der Zugriffsberechtigung AF1...AFn mit einer darin gespeicherten Kennung eines oder mehrerer Benutzer BK verglichen wird. Dies ist in der Figur durch Ausführung eines Vergleichs BK=BK'? symbolisiert. Der dabei erfolgende Datentransfer zwischen der Tastatur T und den Komponenten K1...Kn erfolgt insbesondere gesteuert durch ein Betriebssystem der Datenverarbeitungsanlage DV über einen Datenbus B. Die gespeicherte Kennung eines Benutzers BK kann dabei in jeder Vorrichtung zur Steuerung der Zugriffsberechtigung AF1...AFn bevorzugt in verschlüsselter Form hinterlegt sein. Somit muß erfindungsgemäß jede Komponente K1...Kn jeweils durch die in ihr enthaltene Vorrichtung zur Steuerung der Zugriffsberechtigung AF1...AFn getrennt aktiviert werden. Die gespeicherte Kennung eines Benutzers BK kann zusätzlich zu individuellen, benutzerspezifischen Merkmalen vorteilhaft noch weitere Merkmale aufweisen, wie beispielsweise die Kennung eines Herstellers oder Merkmale zur Identifikation des zugriffsberechtigten Benutzers bei Verlust der Datenverarbeitungsanlage DV. Gegebenenfalls kann es vorteilhaft sein für verschiedene Komponenten K1...Kn in einer Datenverarbeitungsanlage DV auch unterschiedliche Kennungen eines Benutzers BK vorzusehen.

Ein Ausschalten der Datenverarbeitungsanlage DV oder insbesondere eine Entnahme einzelner Komponenten K1...Kn aus der Datenverarbeitungsanlage DV hat zur Folge, daß der jeweilige komponentenspezifische Hauptteil F1...Fn blockiert ist. Somit erfordert die Wiederinbetriebnahme der Datenverarbeitungsanlage DV oder einer entnommenen Komponente K1...Kn eine erneute Identifizierung des jeweils zugriffsberechtigten Benutzers, damit diese durch die entsprechende Vorrichtung zur Steuerung der Zugriffsberechtigung AF1...AFn aktiviert wird.

Bei der Identifizierung eines zugriffsberechtigten Benutzers durch die Vorrichtung zur Steuerung der Zugriffsberechtigung AF1...AFn kann ein kryptographisches Verfahren angewandt werden, insbesondere zur Verschlüsselung der gespeicherten Kennung eines Benutzers BK.

Besonders vorteilhaft kann in einer Komponente K1...Kn eine Verschaltung zwischen der Vorrichtung zur Steuerung der Zugriffsberechtigung AF1...AFn und einer bereits vorhandenen Stromspareinrichtung SF1...SFn sein. Dabei können bestimmten Komponenten K1...Kn eine eigene Stromspareinrichtung SF1...SFn zugeordnet sein. Dies ist in der Figur bereits beispielhaft dargestellt. Dort ist den Komponenten K1...Kn der dargestellten Datenverarbeitungsanlage DV je eine Stromspareinrichtung SF1...SFn zugeordnet. Die Komponente K1...Kn wird durch die Stromspareinrichtung SF1...SFn je nach Gebrauch zu- oder abgeschaltet. Benötigt beispielsweise das Betriebssystem einer Datenverarbeitungsanlage DV die Funktion einer Komponente K1...Kn vorübergehend nicht, so wird die Energieversorgung der entsprechenden Komponente K1...Kn dabei z.B. auf das nötigste Minimum reduziert, d.h. insbesondere abgeschaltet. Eine minimale Energieversorgung kann dennoch erfolgen, beispielsweise um eine Datenerhaltung innerhalb der Komponente K1...Kn aufrechtzuerhalten.

Erfindungsgemäß ist bei dieser Ausführungsform der komponentenspezifische Hauptteil F1...Fn der Komponente K1...Kn durch die entsprechende Stromspareinrichtung SF1...SFn blockierbar. Die bevorzugt direkt in der Komponente K1...Kn enthaltene Verschaltung der Stromspareinrichtung SF1...SFn mit dem komponentenspezifischen Hauptteil F1...Fn ist in der Figur beispielhaft durch den Pfeil A1'...An' dargestellt. Durch die Vorrichtung zur Steuerung der Zugriffsberechtigung AF1...AFn befindet sich die entsprechende Komponente K1...Kn vor der Identifizierung eines Benutzers im passivierten Zustand. Erst nach dessen erfolgreicher Identifizierung durch die Vorrichtung zur Steuerung der Zugriffsberechtigung AF1...AFn gibt diese die Steuerung der Energieversorgung der Komponente K1...Kn über die entsprechende Stromspareinrichtung SF1...SFn frei. Eine Verschaltung zwischen der Vorrichtung zur Steuerung der Zugriffsberechtigung AF1...AFn und der Stromspareinrichtung SF1...SFn ist in der Figur beispielhaft durch den Pfeil A1...An dargestellt.

Vorteil der Erfindung ist die direkte Zuordnung zu, bzw. u.U. Einbindung einer Vorrichtung zur Steuerung der Zugriffsberechtigung AF1...AFn in die einzelnen Komponenten K1...Kn der Datenverarbeitungsanlage DV. Dadurch sind die Datenverarbeitungsanlage DV als solches, aber zusätzlich auch deren einzelne Komponenten K1...Kn separat vor unbefugtem Zugriff durch nicht zugriffsberechtigte Benutzer, insbesondere vor Diebstahl, geschützt. Gegebenenfalls kann eine Vorrichtung zur Steuerung der Zugriffsberechtigung AF1...AFn auch insbesondere in das Substrat einer integrierten Schaltung direkt implementiert sein. Durch das Verschalten der Vorrichtungen mit den Stromspareinrichtungen SF1...SFn können diese zur Passivierung der Komponenten K1...Kn im Rahmen des Zugriffsschutzes gegenüber nicht berechtigten Benutzern mit eingesetzt werden. Ebenso vorteilhaft kann die erfindungsgemäße Vorrichtung zur Steuerung der Zugriffsberechtigung mit dem bisher bekannten, vom Betriebssystem der Datenverarbeitungsanlage DV zentral ausgeführten Datenschutz kombiniert werden, wodurch ein Zugriffsschutz sowohl auf Daten, als auch auf die einzelnen Komponenten der Datenverarbeitungsanlage erreicht wird.

## Patentansprüche

1. Datenverarbeitungsanlage (DV), insbesondere portabler Computer, mit
a) Komponenten (K1...Kn), insbesondere Festplatten und Speichereinheiten, und mit
b) Vorrichtungen zur Steuerung der Zugriffsberechtigung (AF1...AFn), welche den einzelnen Komponenten (K1...Kn) der Datenverarbeitungsanlage (DV) jeweils direkt zugeordnet sind und diese erst dann aktivieren, wenn getrennt in jeder Vorrichtung (AF1...AFn) eine Identifizierung eines zugelassenen Benutzers der Datenverarbeitungsanlage (DV) stattgefunden hat.

2. Datenverarbeitungsanlage (DV) nach Anspruch 1, mit
a) Stromspareinrichtungen (SF1...SFn), welche den Komponenten (K1...Kn) der Datenverarbeitungsanlage (DV) zugeordnet sind, und wobei
b) eine Vorrichtungen zur Steuerung der Zugriffsberechtigung (AF1...AFn) einer Komponente (K1...Kn) der Datenverarbeitungsanlage (DV) derart mit der entsprechenden Stromspareinrichtung (SF1...SFn) verschaltet ist, daß die Energieversorgung der Komponente (K1...Kn) erst dann von der dazugehörigen Stromspareinrichtung (SF1...SFn) freigegegben wird, wenn in der entsprechenden Vorrichtung (AF1...AFn) eine Identifizierung eines zugelassenen Benutzers der Datenverarbeitungsanlage (DV) stattgefunden hat.
